# EUROPEAN PATENT SPECIFICATION

(11) **EP 3 606 338 B1**
(45) Date of publication and mention of the grant of the patent: **25.10.2023**
(21) Application number: 18781349.8
(22) Date of filing: 05.04.2018
(51) Int. Cl.: A01K 63/10, B08B 3/02, B63G 8/00

(54) **CLEANING DEVICE FOR SUBSEA CLEANING AND A METHOD FOR OPERATING THE CLEANING DEVICE**
REINIGUNGSVORRICHTUNG FÜR DIE UNTERWASSERREINIGUNG UND VERFAHREN ZUM BETRIEB DER REINIGUNGSVORRICHTUNG
DISPOSITIF DE NETTOYAGE POUR UN NETTOYAGE SOUS-MARIN ET PROCÉDÉ PERMETTANT DE FAIRE FONCTIONNER LE DISPOSITIF DE NETTOYAGE

(30) Priority: 06.04.2017 NO 20170580; 23.03.2018 NO 20180419; 04.04.2018 NO 20180461
(43) Date of publication of application: 12.02.2020
(73) Proprietor: OCEIN AS, 6516 Kristiansund N (NO)
(72) Inventor: JENSEN, Victor, 6521 Frei (NO)
(74) Representative: Zacco Norway AS
(86) International application number: PCT/NO2018/050091
(87) International publication number: WO 2018/186751

(56) References cited:
- WO-A1-2015/171874
- CN-A- 104 590 516
- CN-A- 104 890 844
- CN-U- 205 308 912
- DE-A1-102008 011 506
- JP-A- 2004 219 355
- US-A1- 2012 266 803
- US-A1- 2015 307 169
- US-A1- 2015 307 169

## Description

The present invention relates to equipment for subsea fish farming, and more particularly concerning cleaning robot for cleaning fish nets, equipment encompassed in fish farming nets and other subsea installations.

The present invention relates to a cleaning device for cleaning fish farm net/cage or subsea equipment, specifically for removing growth and pollution. A number of known technologies and devices are available for the task of cleaning such nets for growth and pollution. Some involve emptying the nets for fish, and bring the net to a cleaning facility, which is a very resource demanding operations. Others are based on crawling robots being driven by belts enabling the robots to crawl along the sides and bottom of the net and cleaning the net by high pressure water nozzles blowing away growth and residue and/or brushes performing a mechanical cleaning of the nets. Using such devices and technologies have always been associated with a risk of exposing the net for excessive wear and tear, and often this type of cleaning processes results in for example breakage/damage of the net/cage and potential risk of creating a hole large enough for the farmed fish to escape. Escaped fish is one of the large threats in sea based fish farming. Crawling devices further very often require a considerable amount of the fluid supplied to the cleaning device to be used in fluid jet thrusters for holding the cleaning device against the net when cleaning to be able to maintain crawling ability, thus requiring large supply of high pressure compressors on supply vessel, and complicated reduction valve assemblies on board the cleaning device for adapting different fluid pressures to different purposes.

Floating equipment, such as buoys carrying bird protection net/roof, represents a problem area for known cleaning apparatuses. Growth on such equipment is located in the surface area, and it is normally on upside down surfaces. To maintain a clean surface on such equipment require a lot of manual cleaning operations for divers. Another deficiency of presently known cleaning equipment is that although they might be providing sufficient cleaning effect on even surfaces, many areas that are unreachable by the tools are left untreated, or in need of manual cleaning (by divers), for example in areas not presenting an even surface. Untreated elements/areas cause growth in these areas. This growth will as a consequence provide cleanerfish, which has the task of grazing on lice and parasites on the farmed fish, with food in that they will graze on the growth instead of the for example lice on salmon.

Thus, there are several problems related to using presently available techniques for cleaning the net/cages in a sea based fish farm:
- Wear and tear creates defects in the net
- Untreated areas leads to deteriorating health status of the population in the nets
- Untreated areas produce alternative pasture for the cleanerfish
- Complicated on board fluid distribution
- Need for manual cleaning operation slow down cleaning process and are resource demanding
- Increased worker health issues
- Longer unproductive time slots

The document WO-A1 -2015/171874 discloses a cleaning device for subsea cleaning operations and a method for operating the cleaning device, wherein the cleaning device comprises a frame, first and second sets of thrusters and a cleaning assembly.

It is the aim of the invention to solve some or all of these above stated problems. To this aim, a cleaning device in accordance with claim 1 and a method in accordance with claim 18 for operating the cleaning device are provided.

The present invention more specifically provides a cleaning robot which performs a cleaning operation that eliminates excessive wear of the nets and requires little to no interference of manual cleaning resources for cleaning the submerged nets.

The present invention concerns a cleaning robot comprising a plurality of thrusters able to maneuver the cleaning robot in a 3 dimensional space independent of a supporting surface, for example a net, and even independent of the orientation of the surface to be cleaned, for example the underside of a floating equipment. Further it is provided one or more nozzles for jet streaming a cleaning fluid, for example water, from the cleaning robot outwards towards an object in the close proximity of the cleaning robot.

The present invention further concerns a cleaning robot comprising one or more nozzles arranged for jet streaming a cleaning fluid into narrow spaces, such as inwardly enclosing corners and into complex construction structures.

The present invention may cooperate with a vacuum module for collecting particles and debris resulting from a cleaning process.

The represent invention further concerns a system for automatic or semi-automatic cleaning of a submerged marine construction such as a fish farm net and/or equipment.

The invention is further described in non-limiting embodiments according to the attached figures where:

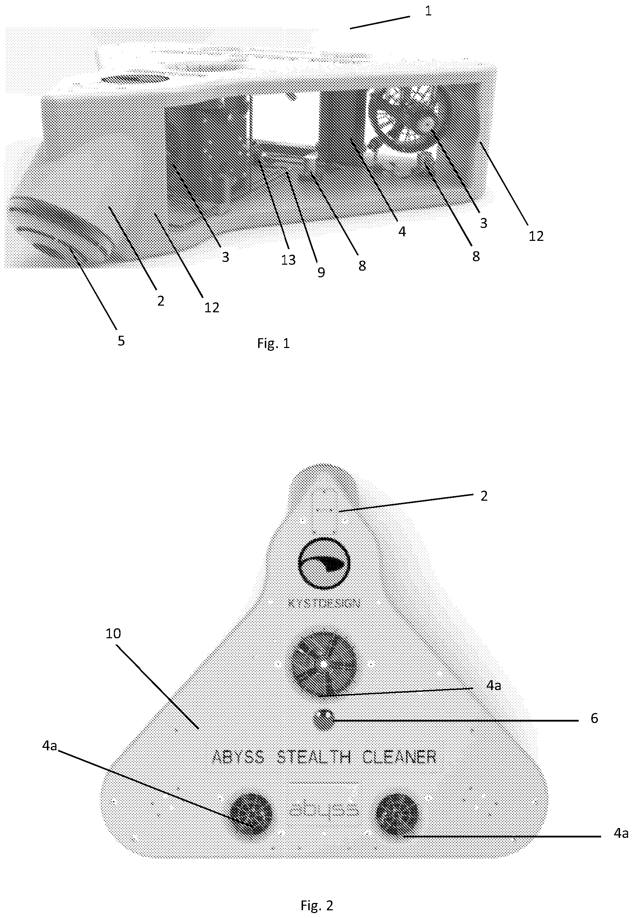

Fig. 1 - Illustrates an oblique side view of the cleaning device
Fig. 2 - Illustrates a view of the cleaning device from above

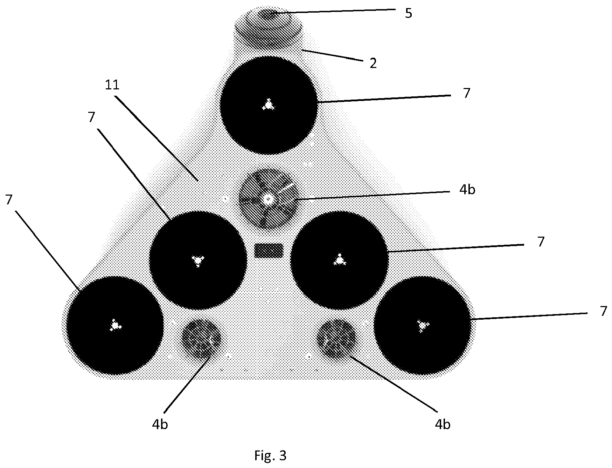

Fig. 3 - Illustrates a view of the cleaning device from below

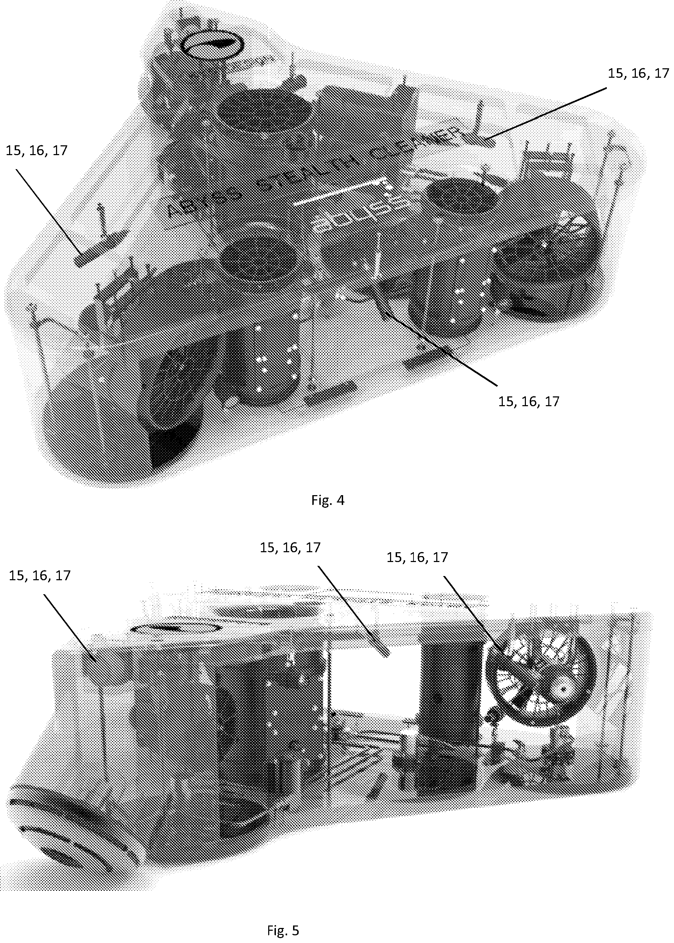

Fig. 4 - Illustrates an oblique view of the cleaning device having an opaque casing
Fig. 5 - Illustrates an oblique side view of the cleaning device having an opaque casing
Fig. 6 - Illustrates the cleaning device arranged in a maintenance rig for the cleaning device
Fig. 7 - Illustrates an embodiment of the cleaning device operated form a ship
Fig. 8A - 8B - illustrates the cleaning device and detail of cleaning device in an optional design having a dedicated front looking camera
Fig. 8C - 8E - illustrates nose cleaning assembly in front-, side- and sectional view, and details of one example design of nose cleaning assembly
Fig. 9 - illustrates the cleaning device in operation cleaning a net and specific hard to reach parts of the net

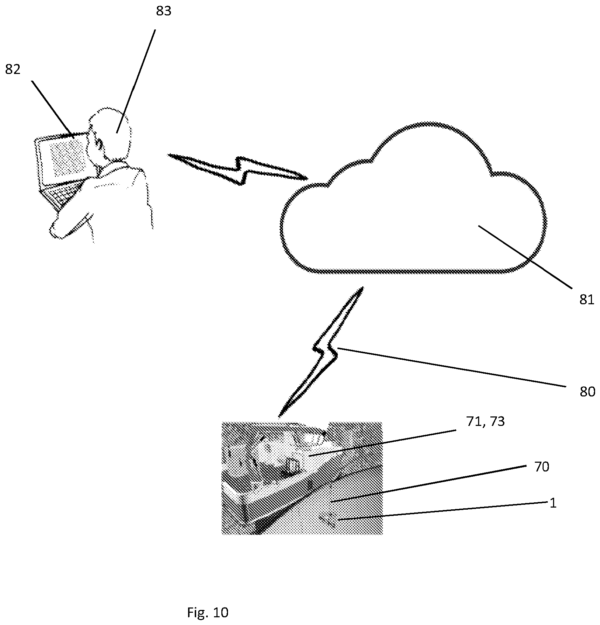

Fig. 10 - Illustrates a system description
Fig. 11A -11B - Illustrates the cleaning device having protective mesh/grilles mounted
Fig. 12A - 12D - Illustrates the cleaning device in various form configurations viewed from above

The present invention comprises a cleaning device 1 able to maneuver in a 3-D pattern in any body of fluid, typically in water inside a fish farm net.

The cleaning device 1 is now described in a first alternative embodiment as shown in the figures.

The present invention comprises an open sided housing wherein an upper plane/roof 10 and lower plane/floor 11 having a shape comprising a protruding/pointing area 2, for example in a shape approximately triangular, is connected by wall elements 12. The wall elements 12 may be arranged in each corner of a triangular shaped cleaning device 1.

The invention comprises multiple individually controlled thrusters 3, 4 enabling a full 360 °, 3-dimentional, maneuverability of the cleaning device 1 in all directions. The thrusters 3, 4 are arranged in the housing 10, 11, 12.

The use of the words "roof" and "floor" is used to ease the reading of the figures, and is not related to what is up and what is down for the cleaning device, as it can operate in any direction where the floor 11 may be positioned uppermost when for example cleaning the upside down oriented surface of some equipment.

The roof 10 and floor 11 has openings 4a, 4b for thruster and a first set of thrusters 4 is arranged in the interior space between the roof 10 and floor 11 and comprise a thrusting direction directed approximately orthogonally on the roof and floor 10, 11.

The roof 10 has further an optional hole 6 for threading an optional umbilical line 70 comprising cleaning fluid supply and power and control lines.

A second set of thrusters 3 are arranged in the interior space between the roof 10 and floor 11 and may comprise a thrusting direction approximately in the same plane as the roof 10 and floor 11. Each of the second set thrusters 3 are arranged close to the outer end of each corner where the thruster 3 has a clear unobstructed thrust path to the sides of the cleaning device 1.

All the thrusters 3, 4 may be operated independently and in both directions in a manner that allows maneuvering in all directions. The thrusters 3, 4 may advantageously be propeller driven, as they are easy to control, both in thrust direction and force. The propeller action may be sourced by electrically or pneumatically motors. Other driving mechanisms of the thrusters 3, 4 may be provided.

One or more Jet nozzles 7 are arranged in the floor 11 for flushing a high speed fluid stream directed out from the outer surface of the floor 11, and the jet nozzles 7 are connected to valves 8 on the interior side of the floor 11. The valves 8 may be connected to a manifold 13 by pipes 9. The manifold may comprise a connector (not shown) for connecting to a fluid line comprised in an umbilical 70 which again is connected to a fluid accumulator. The manifold distributes cleaning fluid to the valves 8.

In an alternative embodiment of the invention, the fluid supply is provided onboard by pumps (not shown) feeding water from the surroundings directly to the manifold 13, or the valves 8 controlling the jet nozzles 7.

Such on board pumps may be powered by power through the umbilical, or by carry-on batteries or other (not shown) for the cleaning device to be able to operate independent of physical attachment to a mother ship.

For even further improved maneuverability the construction may include buoyancy elements (not shown). These may be integrated in the frame and or may be arranged in additional floating buoyancy elements arranged inside and/or outside the cleaning device. The buoyancy elements may be of a fixed buoyancy adapted for a planned operation, or the buoyancy elements may comprise the ability to dynamically adapt/change the buoyancy according to operation depth or task. The buoyancy adaption may be controlled from a remote controlling unit or control room as discussed later for operation control. The buoyancy elements may be a combination of fixed and adaptive elements. The buoyancy elements main task is to assist in keeping the cleaning device at a partially or complete buoyancy equilibrium when submerged and in operation such that less or no extra power is used to maintain operation depth of the cleaning device.

The effect of using buoyancy in the cleaning device is that the maneuverability becomes much more efficient and controllable, and steering the cleaning unit may be performed with less training of the operator compared to presently known cleaning devices.

A further effect of the buoyancy elements when used in present cleaning device is that more thrust may be used for feeding the cleaning assemblies 5 and jet nozzles 7. An underwater cleaning device have a limited budget of thrusting power which is to be used both on positioning, counterbalance and cleaning. The less thrust power that has to be used on keeping the depth level of the cleaning device, the more power can be used on cleaning thrust and counterbalance for the cleaning jet nozzles. This means the present cleaning device invention may be fitted with bigger jet nozzles having more throughput and the effect may be a better cleaning job/efficiency.

The cleaning device further comprise a number of sensors/cameras and/or light source assemblies 15, which may be arranged to illuminate and provide video pictures of the surrounding of the cleaning device 1.

One or more radar sensor/ultrasound transducer 16 may be arranged in the cleaning device 1 for the purpose of providing a good view of the surroundings, even when the cleaning device is operating in waters without visibility. For example under cleaning operation there may be a lot of loose debris floating in the water as a result of the high speed flushing from the nozzles, and the video image may be unable to give enough information to the operator.

Thus, the cleaning device 1 is able to clean any surface at very close range without actually being in physical contact with the surface it is cleaning, the thrusters 3, 4 will enable maneuvering of the cleaning device 1 in a position/path where the cleaning fluid can be flushed from the jet nozzles 7 from a close distance without risking physical contact between the cleaning device 1 and the surface/net 72 to be cleaned. Less contact between the two will as a consequence reduce damages such as rifts and holes in the net 72/surface to be cleaned.

A separate advantage provided with the cleaning device compared with other crawling devices is that none of the fluid supply is used to maneuver or hold in position the cleaning device. Thus, all fluid supplied / created is for one purpose only, the cleaning process. The cleaning device thereby provide a higher yield in spending all (100%) of the fluid for cleaning purposes, and the fluid can be supplied in the required pressure for cleaning operation only. The supply vessel can have a simpler supply regime, and the on-device equipment for distributing the cleaning fluid may be simplified.

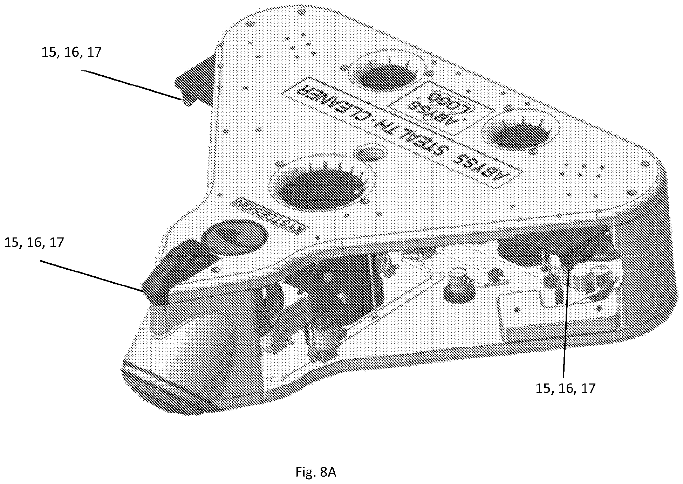

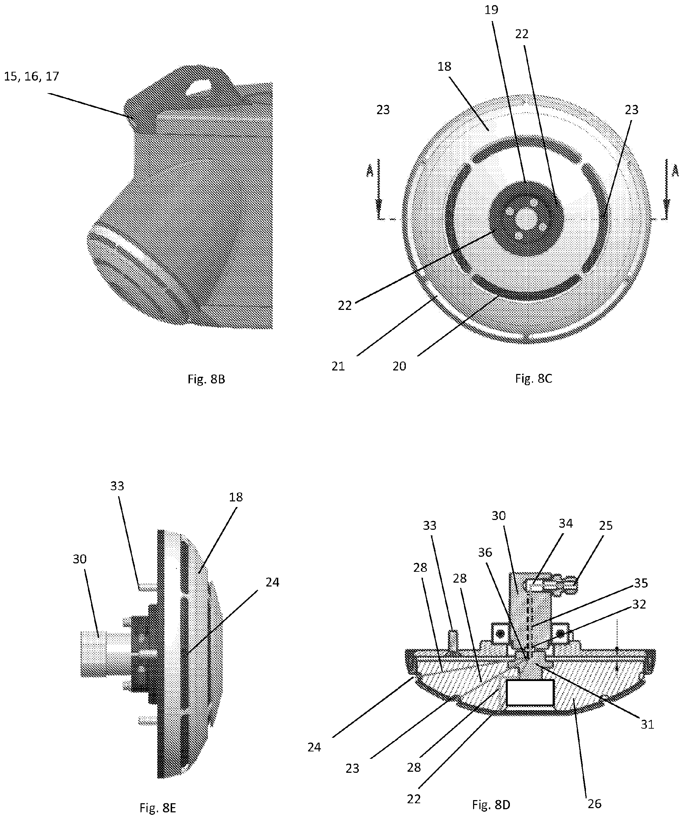

Hard to access areas of the installations to be cleaned or surveyed, such as inward corners, machinery or other equipment with uneven surfaces such as sensors, cameras, and other that normally requires specific attention by manual cleaning operation executed by divers or by complicated hauling operations to get the equipment over surface to be cleaned, now can be cleaned in situ by the present invention cleaning device 1. The novel triangular design and the protruding nose cleaning assembly 5 in a corner nozzle housing 2 arranged in one or more of the corners of the cleaning device 1 allows for the cleaning device 1 of the present invention to provide an unparalleled accessibility to difficult to access areas, and to execute the cleaning operation in such areas. The nose cleaning assembly 5 comprise a jet nozzle 22, 23, 24 which may direct the flushing cleaning fluid in different jet patterns, in order to increase the ability to access even further difficult to reach areas, such as for example behind pipes and into grooves and recesses in equipment. The nose cleaning assembly 5, as outlined in one example embodiment in fig. 8C - 8E, may comprise a rotating jet nozzle kernel 26 hosting one or more jet nozzles, and a protection cap 18 having openings for letting the fluid jet stream from the rotating nozzles to pass through the protection cap. These openings may typically be an inner circular opening 19 corresponding to a center oriented jet nozzle 22, and further slots in a radial distance aligned with each additional jet nozzle 23, 24 rotation path. 3 rotating nozzle pairs radius will correspond to a center hole 19 and two "rings" 20, 21 of slots in the protection cap 18. The material of the protection cap 18 is if a material able to endure the shear forces of the fluid jet stream from the jet nozzles 22, 23, 24. The jet nozzles may be arranged to be in fluid communication through channels 28 in a rotating kernel 26, the channels 28 being connected by fluid communication to the fluid supply valve 25. The valve is connected to a static shaft providing an internal channel 35 and a connected rotating shaft 31, connected through bearing means 32, wherein the internal channel 35 is extended into the rotating shaft 31 and connects to the meeting point 36 of the channels 28 of the rotating kernel 26. The rotating shaft 31 is aligned such that the internal channel meets the meeting point 36 of the channels 28 of the rotating kernel 26, and is fixedly attached to the kernel 26. The rotating shaft rotates with the rotating kernel, and thereby maintains the fluid channel 34, 28 from the valve to the jet nozzles 22, 23, 24. Thus there is a continuous fluid communication from the valve 25 to the jet nozzles 22, 23, 24. The supply valve 25 is connected to the fluid source via piping/pump or other.

Figure 8D also identifies one of the attachment means 33 connecting the static part of the nose cleaning assembly 5 to the chassis of the cleaning device 1.

The nose cleaning assembly 5 is here shown in one embodiment, but it should be considered within the scope of the invention to substitute the design of the nose cleaning assembly 5 with jet streaming valve/nozzle providing sufficient fluid properties for cleaning an object arranged in the jet stream path of the cleaning fluid delivered by the nose cleaning assembly.

All the jet nozzles 7, 22, 23, 24 may be designed to have different flushing modes, such as pulsed flushing, centered jet beam, dispersed jet stream, rotating fluid beam, and other, and also combinations of these modes. The flushing modes and direction control of the fluid beam may be controlled individually for any of the jet nozzle by an operator 83 located remotely from the cleaning device. The operator may be located on a supply ship 71, or even on shore a long distance from the actual cleaning process.

The cleaning device 1 is operated by a controller, human or automated programs, based on input from sensors and cameras 15, 16, 17 on the cleaning device, transmitted through the control lines comprised in the umbilical 70 to a controlling unit, the controlling unit communicating 80 by wired or wireless lines directly or via a communication medium such as a cloud 81 to one of a computer comprising dedicated programs for operation of the cleaning device, a control room where computing means 82 provides video and/or other sensor output that enables an operator 83 to send navigation and operational commands to the cleaning device1, or a mix of the two.

The cleaning device is shown in different configurations in the figures, and the features and characteristics are described in relation to the figures, but it should be understood that the features may be incorporated in any number or combination to provide the features of the cleaning device as described in the claims.

The cleaning device 1 may comprise an on board controller (not shown) which may use sensor output as parameters for autonomous operation of the cleaning device 1. This feature can be utilized in one embodiment where signal transmitters arranged on the perimeters of the fish net 72 is continuously transmitting signals which enable the cleaning device 1 to position itself within the net 72, and to navigate over the complete net 72 structure and execute a cleaning operation making sure no area is uncleaned when done. In such an operation there may not need to be an advanced remote controlling unit or control room.

The operation regime of the cleaning device 1 may further comprise advance path recording and/or pattern recognition features, to facilitate an effective cleaning process ensuring that all areas of the desired target to be cleaned. Camera(s) 17 may be used to record and give input to analysis SW for determining boundaries between treated and untreated areas, which may further be used to maneuver the cleaning device 1.

The camera(s) 17 may also be used to manually or automatically monitor the efficiency of the cleaning operation. When hard to remove growth is encountered it may be possible to repeat cleaning operation on the identified location, and further alter the cleaning pressure/jet stream pattern if necessary.

Since most nets in the fish farm industry are impregnated with growth reducing components it is an important element to adapt the cleaning regime to be as gentle as possible. A typical regrowth time period (from clean to unacceptable growth on elements that need to be cleaned) may typically be between 2-10 days in clean and healthy waters when impregnation works properly. As the impregnation effect deteriorates, the regrowth time period is reduced. One of the major factors that reduce the effect of the impregnation is the cleaning process, and equipment that operates having physical contact with object to be cleaned represents most wear and tear. The cleaning device 1 of present invention provides not only less physical contact with equipment to be cleaned, and possibility to lower jet stream pressure, but also a more reliable growth time prediction. There are only known factors representing the wear, being time since last impregnation and the controllable cleaning regime.

Typical equipment in a fish farm environment other than the net construction may be represented by a floating installation such as bird protection roof/net. Such equipment may be supported by floating buoys floating inside the fish nets. Such buoys represent a difficult to clean object if available cleaning equipment is limited to normal crawling devices. These cannot operate freely in open water, and have limited operation ability on upward or vertical facing surfaces. Most of the buoys surfaces in need of cleaning faces downward in the water. The cleaning device 1 of present invention may readily be used for cleaning downward facing surfaces, since the thrusters of the cleaning device 1 may maneuver and control the orientation of the cleaning device in any position or orientation, and therefore the cleaning of difficult to access surfaces represents no hindrance for present invention.

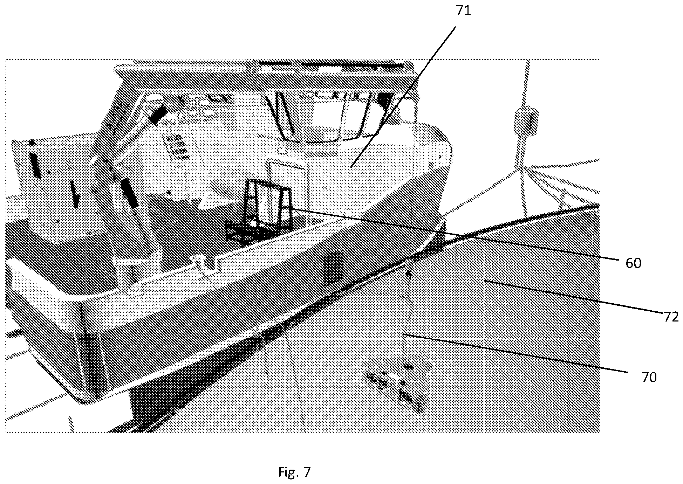

In figure 7 the cleaning device is launched from a supply ship 71, but it is within the scope of invention to provide a communication line 80 based upon wireless communication to a remote control room 82, 83 function where the cleaning device 1 may be launched from an onsite base (not shown) at the facility being cleaned, wherein the facility comprising pressurized cleaning fluid resources, power supply, control and communication means, and further if necessary the anchor point for the umbilical that comprises cleaning fluid supply, power line and signaling to and from the cleaning device 1.

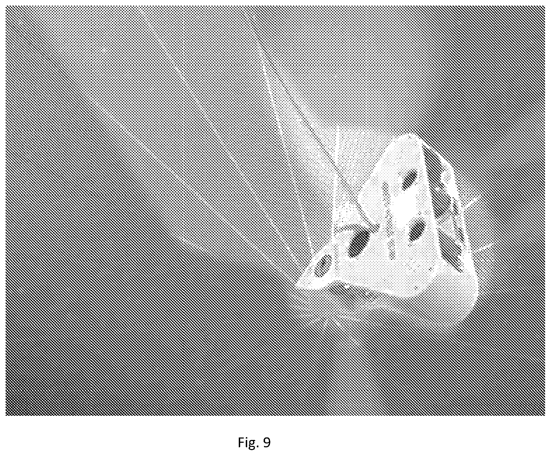

Figure 9 shows a use case where the cleaning device is operated close to the bottom in a fish pen, and using the cleaning nose to attack the bottom structure of the net construction.

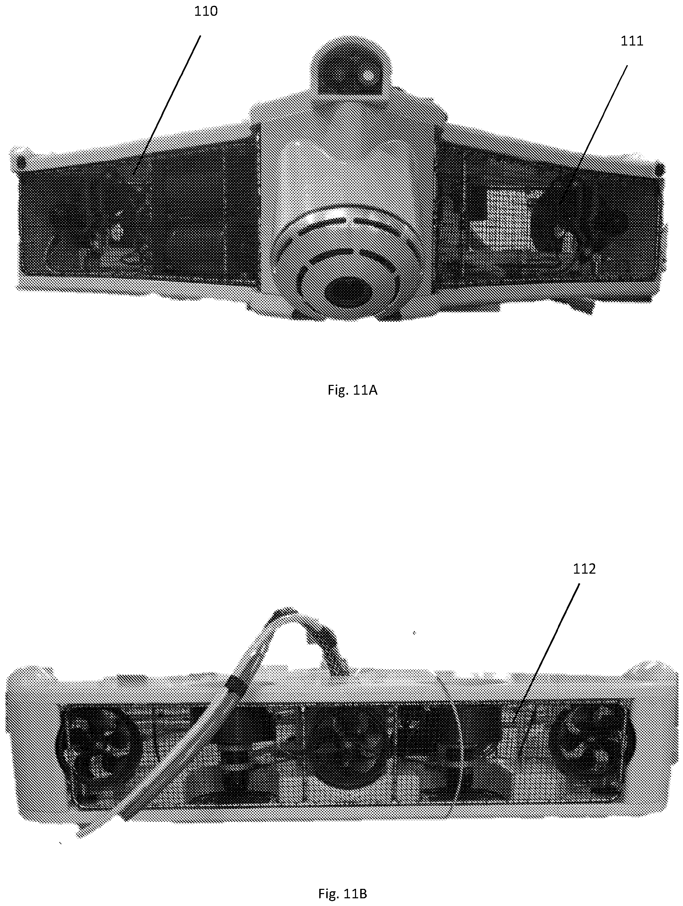

Figure 11A and 11B illustrates a further feature of the cleaning device seen from the front and back respectively, namely the protective mesh/grid/net 110, 111, 112 that may be mounted when cleaning device is to be used in environments where there are a risk that objects may come into the internal construction/space of the cleaning device. This can for example be fish or also larger debris from the cleaning process in fish pens. The protective mesh/grid/net 110, 111, 112 may comprise quick release connecting means, such as side release buckle straps, male threaded snap lock and other, for easy mounting on and removal from the cleaning device 1, which eases the accessibility to the internal space when servicing and cleaning the cleaning device 1 between deployment tasks.

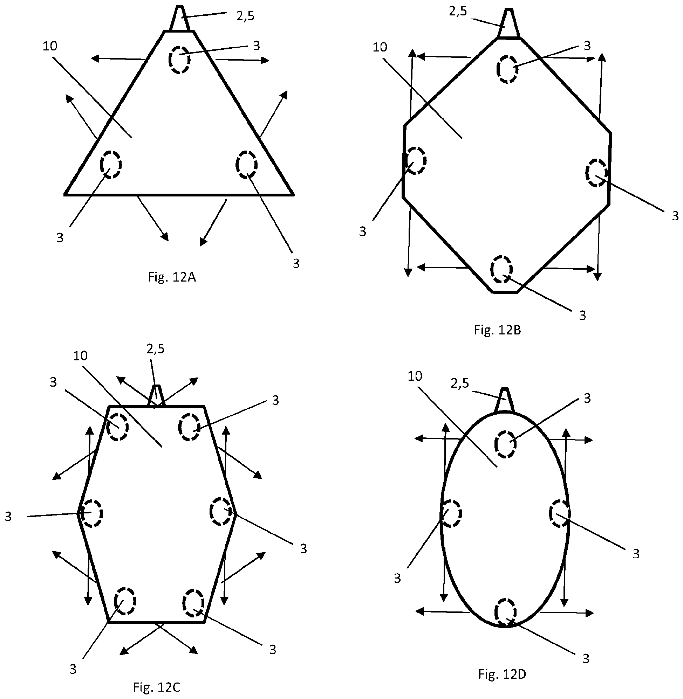

In figure 12A to 12D a variation of different outlines of format configurations is shown as alternatives to the triangular form. The outline figures show alternative arrangements of the thrusters 3, and they also show alternative arrangements of the protruding nose cleaning assembly 5 in a nozzle housing 2 arranged in one or more of the most periphery parts of the cleaning device 1 allowing for the cleaning device 1 of the present invention to provide an unparalleled accessibility to difficult to access areas, and to execute the cleaning operation in such areas. The figures 12A - 12D show for simplicity only a few features, but it shall be understood that all the features discussed above also apply to the embodiments according to the form factors shown in these figures. The four alternative form factors also indicates that the invention may be designed in a variation of forms. Common for the alternative format configurations of the invention is, in addition to the peripherally arranged protruding nose cleaning assembly 5, also that the thrusters 3 in the horizontal plane working together with the thrusters 4 (not shown in these figures) in the vertical plane for enabling a full 360 °, 3-dimentional, maneuverability of the cleaning device 1 in all directions. The arrows in figure 12A - 12D illustrates examples of thrust forces and direction potentially provided by the thrusters 3 working in the horizontal plane. Horizontal here being a relative direction parallel with the roof plane 10.Although the examples herein describes cleaning operations, the cleaning device 1 of the present invention may well be used for other purposes, such as distributing fluid comprising impregnation components, gasses, grains for "sandblasting or grinding", or other operation where the use of features of the cleaning device 1 advantageously can improve the effect.

For optimal maneuverability it is provided two or more thrusters 3 arranged close to the outer end of one or more of the most periphery parts of the frame of the cleaning device 1 where each thruster 3 has a mostly unobstructed thrust path to both sides of the thrusters 3. The figures 12A-D illustrates possible positions for the thrusters in a variety of frame forms, although it is also possible to provide full maneuverability with only one thruster 3 working in the horizontal plane.

A further feature of the cleaning device 1 of present invention may be a vacuum unit (not shown) enabling collection of debris and particles which is blasted of the object to be cleaned. Such vacuum unit may have one or more of the jet nozzles 7, 22, 23, 24 replaced by a suction opening. The suction opening which will be arranged at the end of a vacuum line in the cleaning device 1 may be connected to a vacuum suction unit at the other end of the vacuum line. It is preferred to let the vacuum line be bundled in the umbilical line but not required. A vacuum suction unit will typically be located at the supply ship 71 or at an onsite base. Depending on water conditions there might be advantageous to operate two cleaning devices 1 at the same time, wherein one operates the cleaning process, and one is dedicated to a vacuum operation having a multiple vacuum suction openings connected to one or more vacuum lines. In such a scenario it is envisage that the positioning of the cleaning device 1 participating as the cleaner is arranged upstream of the object to be cleaned, and the cleaning device 1 participating in the vacuum operation is arranged to be positioned downstream relative the object t be cleaned.

The cameras 17 and sensors 15, 16 may be used for determining relative position of the cleaning device 1 with reference to the object to be cleaned, it is possible to automate or semi-automate the operation of the cleaning process, in that movement pattern can be decided by custom navigation programs set up for use on specific targets. Thus it may be possible to avoid human error factor causing harm to the object to be cleaned.

Operator may still be needed to oversee a cleaning operation, and provide supply and analysis of camera and sensor input. The advantage of automation or semi-automation is that cleaning time for each object may be even further reduced.

Having a free floating multipurpose cleaning device 1 with a unique triangular design comprising an open house structure for mounting all equipment such as thrusters 4, jet nozzles 7, sensors 15, 16, cameras 17 umbilical 70 connectors and crane wire connector (not shown) in a manner that eliminates any protruding parts, enhances the ability of operating the cleaning device 1 inside an object to be cleaned without risking any damage to the object. The cleaning operation may therefore be executed much more gently and with care, and fewer faults enables higher operation efficiency. It even ensures a more efficient maintenance task.

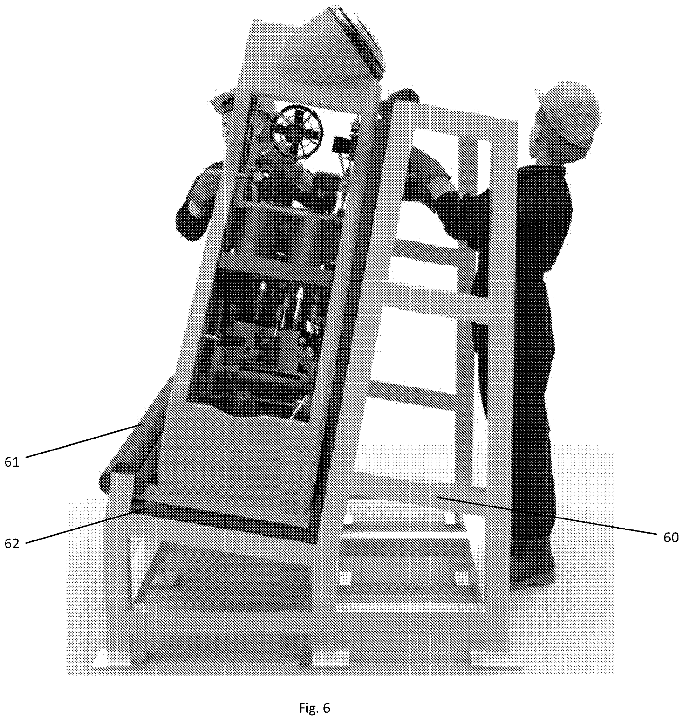

A cleaning device stand 60 is also provided for the cleaning device 1. The main feature of the stand 60 is to provide safe storage of the cleaning device and offer easy access to all parts of the cleaning device 1 for maintenance purpose. A frame like construction is provided comprising a rest stool comprising padding 61, 62, and a leaning wall wherein the complete structure provides a stand 60 where the cleaning device 1 may be placed and which will offer a stable unassisted support for the cleaning device 1 in an upstanding position as illustrated in figure 6. When placed in the stand 60 the maintenance resources may access the cleaning device 1 from both roof side and floor side as well as from two sides simultaneously. No need for lifting and moving to get access to parts of the cleaning device 1.

Now a typical cleaning operation wherein the cleaning device is operated from a supply ship 71 for cleaning a fish net 72 comprised in a fish farm will be described: The cleaning process of a fish farm net and equipment may be initiated by the cleaning device 1 being launched by a maintenance vessel 71.

The operator on board the maintenance vessel 71 registers on the controlling computing means 82 the farm net 72 to be cleaned, and the operation programs initiates the cleaning process. Cameras, gyros and other sensors on the cleaning device 1 ensure continuous navigation and position definition of the cleaning device 1.

The thrusters 3, 4 is operated to navigate the cleaning device 1 along a planned cleaning pattern, and operation of the jet nozzles 7, 22, 23, 24 are individually adapted to the area to be cleaned and detected level of growth.

Monitoring data of result and treated area may be continuously transmitted to the operator or controlling system in the computer means 82. Even remote operation by a computer or operator being located far from the fish farm may be supported by wireless communication.

When cleaning process is not executing a cleaning procedure, the cleaning device 1 may be used as a reconnaissance vessel, much like an advanced ROV for monitoring result of cleaning process or other purpose, such as monitoring fish health, content level of fodder reservoirs, farm sensor operation, inspection of elements such as: anchoring, ropes, wires, moorings, net heath status (holes and wear) and other.

When cleaning and/or surveillance job is done, the cleaning device 1 may be hauled back on board the maintenance vessel 71 or parked in an onsite docking station (not shown), and optionally placed in a cleaning device stand 60 for control and maintenance.

## Claims

1. Cleaning device (1) suitable for subsea cleaning operations comprising:
a frame (1), wherein a roof plane (10), a floor plane (11) and connecting frame elements (12) defines an inner space,
the connecting frame elements (12) connecting the roof plane (10) and the floor plane (11) a defined distance apart,
a first set of thrusters (4) arranged between the inside of the roof plane (10) and the floor plane (11) and mounted to opposite openings (4a, 4b) in the roof plane (10) and the floor plane (11) respectively to allow thrusters (4) to move water either way through the thrusters (4) orthogonally relative the roof and floor planes (10, 11),
a second set of thrusters comprising one or more thrusters (3) arranged between the inside of the roof plane (10) and the floor plane (11) mounted to allow thrusters (3) to move water either way through the thrusters (3) in the same plane as the roof and floor plane (10, 11) wherein each of the one or more thrusters (3) are arranged close to the outer end of one or more of the most periphery parts of the frame (1) where each thruster (3) has a substantially unobstructed thrust path to both sides of the thruster (3),
a nose cleaning assembly (5) arranged in a corner nozzle housing (2) arranged in one of the corners of the cleaning device (1), and the nose cleaning assembly (5) comprise jet nozzles (19, 20, 21) connected to a fluid source via a fluid inlet (25) and channels (28) providing cleaning accessibility to difficult to access areas.

2. Cleaning device according to claim 1, wherein the floor plane (11) comprise one or more jet nozzles (7) for flushing a high speed fluid stream directed orthogonally out from the outer surface of the floor plane (11), and the jet nozzles (7) are connected to jet valves (8) on the interior side of the floor plane (11) where the jet valves (8) are connected to a manifold (13) by pipes (9).

3. Cleaning device according to any of claims 1 or 2, wherein the channels (28) arranged in a rotating kernel (26), wherein the jet nozzle (19, 20, 21) may direct the flushing cleaning fluid at different angles, in order to increase the ability to access even further difficult to reach areas.

4. Cleaning device according to any of the previous claims, wherein the floor plane (10) comprise a hole (6) for leading an umbilical line (70), wherein the umbilical line (70) comprising at least a power line and control signal line.

5. Cleaning device according to claim 4, wherein the cleaning device (1) further comprise sensors and cameras (15, 16, 17) connected to the control signal line in the umbilical (70).

6. Cleaning device according to any of previous claim 4 or 5, wherein the umbilical line (70) further comprising a fluid supply line.

7. Cleaning device according to claim 2, wherein the floor plane (10) comprise a hole (6) for leading an umbilical line (70), wherein the umbilical line (70) comprising at least a power line and control signal line, and a fluid supply line and an onboard pump feed water directly from the surroundings to the manifold (13) or the valves (8) feeding the nozzles (7).

8. Cleaning device according to claims 1 to 7, further comprising at least one gyro sensor (16) for providing navigational/position data input to a controller.

9. Cleaning device according to claims 1 to 8, further comprising at least one ultrasound transducer sensor (16), for providing surrounding vision data input to controller.

10. Cleaning device according to any one of the previous claims, wherein the cleaning device have a substantially triangular shape, and the nose cleaning assembly (5) arranged in a corner nozzle housing (2) protrudes from one of the corners of the triangularly shaped cleaning device.

11. Cleaning device according to any one of the previous claims, wherein the cleaning device further comprise protection mesh/grid/net (110. 111. 112) for keeping objects to enter the inner space of the cleaning device (1).

12. Cleaning device according to claim 11, wherein protection mesh/grid/net (110. 111. 112) is attached to the cleaning device (1) by quick release connecting means.

13. Cleaning device according to any one of the previous claims, wherein the cleaning device comprise buoyancy means for assisting keeping the cleaning device (1) in a partially or complete buoyancy equilibrium at required operation depth.

14. Cleaning device according to claim 13, wherein the buoyancy means are one of or a combination of fixed buoyancy elements and dynamically controllable buoyancy elements.

15. System suitable for operating a cleaning device, comprising: the cleaning device (1) according to any of claim 1 to 14, a base vehicle (71, 73) comprising a control room control unit (82), the cleaning device (1) comprising a communication unit for communicating with the control room control unit (82) via a wired or wireless (80, 81) transmission network and is thus connected to the base vehicle (71, 73) via means for transmitting control signal and sensor (15, 16) data.

16. System according to claim 15, wherein control room control unit (82) is a computer comprising a program programmed for analyzing sensor and camera (15, 16, 17) output, and for transmitting control signals to the cleaning device (1).

17. System according to claim 15, wherein control room control unit (82) is a computer displaying sensor and camera (15, 16, 17) output, and the computer further receives and transmit control signals from an operator (83) to the cleaning device (1).

18. Method for operating the cleaning device according to any of claim 1 to 14, comprising the steps:
launch the cleaning device (1) into a fish pen, monitor the surroundings cleaning device (1) based upon input from sensors and cameras (15, 16, 17), and initiate a cleaning process,
use one or more jet nozzles (7) for flushing a high speed fluid stream directed orthogonally out from the outer surface of the floor plane (11) on flat surfaces in need of cleaning,
use nose cleaning assembly (5) comprising jet nozzles (19, 20, 21) for flushing a high speed fluid stream directed directly on difficult to reach areas and objects in need of cleaning.

## Patentansprüche

1. Reinigungsvorrichtung (1), die sich für Unterwasserreinigungsvorgänge eignet, umfassend:
ein Rahmen (1), wobei eine Dachebene (10), eine Bodenebene (11) und Verbindungsrahmenelemente (12) einen Innenraum definieren,
wobei die Verbindungsrahmenelemente (12) die Dachebene (10) und die Bodenebene (11) in einem definierten Abstand zueinander verbinden,
einen ersten Satz von Strahlrudern (4), die zwischen dem Inneren der Dachebene (10) und der Bodenebene (11) angeordnet und an gegenüberliegenden Öffnungen (4a, 4b) in der Dachebene (10) bzw. der Bodenebene (11) montiert sind, um zu ermöglichen, dass die Strahlruder (4) Wasser jedenfalls durch die Strahlruder (4) orthogonal relativ zu der Dach- und der Bodenebene (10, 11) bewegen,
einen zweiten Satz von Strahlrudern, der einen oder mehrere Strahlruder (3) umfasst, die zwischen dem Inneren der Dachebene (10) und der Bodenebene (11) angeordnet sind, die montiert sind, um zu ermöglichen, dass Strahlruder (3) Wasser jedenfalls durch die Strahlruder (3) in der gleichen Ebene wie die Dach- und die Bodenebene (10, 11) bewegen, wobei jedes des einen oder der mehreren Strahlruder (3) nahe an dem äußeren Ende eines oder mehrerer der meisten Umfangsteile des Rahmens (1) angeordnet sind, wobei jedes Strahlruder (3) einen im Wesentlichen unbehinderten Schubweg zu beiden Seiten des Strahlruders (3) aufweist,
eine Nasenreinigungsbaugruppe (5), die in einem Eckdüsengehäuse (2) angeordnet ist, das in einer der Ecken der Reinigungsvorrichtung (1) angeordnet ist, und wobei die Nasenreinigungsbaugruppe (5) Strahldüsen (19, 20, 21) umfasst, die über einen Fluideinlass (25) und Kanäle (28) mit einer Fluidquelle verbunden sind, über die schwer zugängliche Bereiche zu Reinigungszwecken zugänglich sind.

2. Reinigungsvorrichtung nach Anspruch 1, wobei die Bodenebene (11) eine oder mehrere Strahldüsen (7) zum Spülen eines Hochgeschwindigkeits-Fluidstroms umfassen, der orthogonal von der Außenfläche der Bodenebene (11) aus dieser gelenkt ist, und wobei die Strahldüsen (7) mit Strahlventilen (8) an der Innenseite der Bodenebene (11) verbunden sind, wobei die Strahlventile (8) durch Rohre (9) mit einem Verteiler (13) verbunden sind.

3. Reinigungsvorrichtung nach einem der Ansprüche 1 oder 2, wobei die Kanäle (28) in einem rotierenden Kern (26) angeordnet sind, wobei die Strahldüse (19, 20, 21) das Spülreinigungsfluid in verschiedenen Winkeln lenken kann, um die Zugänglichkeit zu noch schwerer zugänglichen Bereichen zu erhöhen.

4. Reinigungsvorrichtung nach einem der vorstehenden Ansprüche, wobei die Bodenebene (10) ein Loch (6) zum Führen einer Versorgungsleitung (70) umfasst, wobei die Versorgungsleitung (70) wenigstens eine Stromleitung und eine Steuersignalleitung umfasst.

5. Reinigungsvorrichtung nach Anspruch 4, wobei die Reinigungsvorrichtung (1) ferner Sensoren und Kameras (15, 16, 17) umfasst, die mit der Steuersignalleitung in der Versorgung (70) verbunden sind.

6. Reinigungsvorrichtung nach einem der vorstehenden Ansprüche 4 oder 5, wobei die Versorgungsleitung (70) ferner eine Fluidzufuhrleitung umfasst.

7. Reinigungsvorrichtung nach Anspruch 2, wobei die Bodenebene (10) ein Loch (6) zum Führen einer Versorgungsleitung (70) umfasst, wobei die Versorgungsleitung (70) wenigstens eine Stromleitung und eine Steuersignalleitung umfasst, und wobei eine Fluidzufuhrleitung und
eine integrierte Pumpe Wasser direkt aus der Umgebung zu dem Verteiler (13) oder den die Düsen (7) bespeisenden Ventilen (8) speisen.

8. Reinigungsvorrichtung nach den Ansprüchen 1 bis 7, die ferner wenigstens einen Gyrosensor (16) zum Bereitstellen von Navigations-/Positionsdaten umfasst, die in eine Steuerung eingegeben werden.

9. Reinigungsvorrichtung nach den Ansprüchen 1 bis 8, die ferner wenigstens einen Ultraschallwandlersensor (16) zum Bereitstellen von Umgebungssichtdaten umfasst, die in die Steuerung eingegeben werden.

10. Reinigungsvorrichtung nach einem der vorstehenden Ansprüche, wobei die Reinigungsvorrichtung eine im Wesentlichen dreieckige Form aufweist und die Nasenreinigungsbaugruppe (5), die in einem Eckdüsengehäuse (2) angeordnet ist, von einer der Ecken der dreieckförmigen Reinigungsvorrichtung vorsteht.

11. Reinigungsvorrichtung nach einem der vorstehenden Ansprüche, wobei die Reinigungsvorrichtung ferner ein Schutzgitter/-raster/-netz (110. 111. 112) umfasst, um zu verhindern, dass Objekte in den Innenraum der Reinigungsvorrichtung (1) eindringen.

12. Reinigungsvorrichtung nach Anspruch 11, wobei das Schutzgitter/-raster/-netz (110. 111. 112) durch Schnelllöseverbindungsmittel an der Reinigungsvorrichtung (1) angebracht ist.

13. Reinigungsvorrichtung nach einem der vorstehenden Ansprüche, wobei die Reinigungsvorrichtung ein Auftriebsmittel als Unterstützung dafür umfasst, die Reinigungsvorrichtung (1) in einer erforderlichen Betriebstiefe in einem Teil- oder vollständigen Auftriebsgleichgewicht zu halten.

14. Reinigungsvorrichtung nach Anspruch 13, wobei das Auftriebsmittel eines von festen Auftriebselementen und dynamisch steuerbaren Auftriebselementen oder eine Kombination daraus sind.

15. System, das sich zum Betreiben einer Reinigungsvorrichtung eignet, umfassend:
die Reinigungsvorrichtung (1) nach einem der Ansprüche 1 bis 14,
ein Basisvehikel (71, 73), das eine Steuerraum-Steuereinheit (82) umfasst,
wobei die Reinigungsvorrichtung (1) eine Kommunikationseinheit zum Kommunizieren mit der Steuerraum-Steuereinheit (82) über ein drahtgebundenes oder drahtloses (80, 81) Übertragungsnetzwerk umfasst und somit über ein Mittel zum Übertragen von Steuersignaldaten und Daten von Sensoren (15, 16) mit dem Basisvehikel (71, 73) verbunden ist.

16. System nach Anspruch 15, wobei die Steuerraum-Steuereinheit (82) ein Computer ist, der ein Programm umfasst, das so programmiert ist, dass es eine Ausgabe von Sensoren und Kameras (15, 16, 17) analysiert und Steuersignale an die Reinigungsvorrichtung (1) überträgt.

17. System nach Anspruch 15, wobei die Steuerraum-Steuereinheit (82) ein Computer ist, der eine Ausgabe von Sensoren und Kameras (15, 16, 17) anzeigt, und wobei der Computer ferner Steuersignale von einem Benutzer (83) empfängt und an die Reinigungsvorrichtung (1) überträgt.

18. Verfahren zum Betreiben der Reinigungsvorrichtung nach einem der Ansprüche 1 bis 14, das die Schritte umfasst:
Starten der Reinigungsvorrichtung (1) in ein Fischgehege, Überwachen der Umgebungsreinigungsvorrichtung (1) auf der Grundlage einer Eingabe von Sensoren und Kameras (15, 16, 17), und Einleiten eines Reinigungsprozesses,
Verwenden einer oder mehrerer Strahldüsen (7) zum Spülen eines Hochgeschwindigkeits-Fluidstroms, der orthogonal von der Außenfläche der Bodenebene (11) aus dieser auf flache Oberflächen gelenkt wird, die gereinigt werden müssen,
Verwenden einer Nasenreinigungsbaugruppe (5), die Strahldüsen (19, 20, 21) umfasst, zum Spülen eines Hochgeschwindigkeits-Fluidstroms, der direkt auf schwer zugängliche Bereiche und Objekte gelenkt ist, die gereinigt werden müssen.

## Revendications

1. Dispositif de nettoyage (1) adapté à des opérations de nettoyage sous-marin comprenant :
un cadre (1), dans lequel un plan de toit (10), un plan de plancher (11) et des éléments de cadre de liaison (12) définissent un espace interne,
les éléments de cadre de liaison (12) reliant le plan de toit (10) et le plan de plancher (11) à une distance définie,
un premier ensemble de propulseurs (4) agencés entre l'intérieur du plan de toit (10) et le plan de plancher (11) et montés sur des ouvertures opposées (4a, 4b) dans le plan de toit (10) et le plan de plancher (11) respectivement pour permettre aux propulseurs (4) de déplacer l'eau dans un sens ou dans l'autre à travers les propulseurs (4) orthogonalement par rapport aux plans de toit et de plancher (10, 11),
un second ensemble de propulseurs comprenant un ou plusieurs propulseurs (3) agencés entre l'intérieur du plan de toit (10) et le plan de plancher (11) montés pour permettre aux propulseurs (3) de déplacer l'eau dans un sens ou dans l'autre à travers les propulseurs (3) dans le même plan que le plan de toit et de plancher (10, 11), dans lequel chacun des un ou plusieurs propulseurs (3) est agencé à proximité de l'extrémité extérieure d'une ou plusieurs des parties les plus périphériques du cadre (1) où chaque propulseur (3) a un chemin de poussée sensiblement dégagé des deux côtés du propulseur (3),
un ensemble de nettoyage à bec (5) agencé dans un boîtier de buse d'angle (2) agencé dans l'un des coins du dispositif de nettoyage (1) et l'ensemble de nettoyage à bec (5) comprend des buses à jet (19, 20, 21) reliées à une source de fluide par l'intermédiaire d'une entrée de fluide (25) et de canaux (28) permettant de nettoyer des zones difficiles d'accès.

2. Dispositif de nettoyage selon la revendication 1, dans lequel le plan de plancher (11) comprend une ou plusieurs buses à jet (7) pour expulser un courant de fluide à grande vitesse dirigé orthogonalement hors de la surface extérieure du plan de plancher (11), et les buses à jet (7) sont reliées à des vannes à jet (8) sur le côté intérieur du plan de plancher (11), où les vannes à jet (8) sont reliées à un collecteur (13) par des tuyaux (9).

3. Dispositif de nettoyage selon l'une quelconque des revendications 1 ou 2, dans lequel les canaux (28) sont agencés dans un noyau rotatif (26), dans lequel la buse à jet (19, 20, 21) peut diriger le fluide de nettoyage expulsé selon différents angles, afin d'augmenter la capacité d'accéder à des zones encore plus difficiles d'accès.

4. Dispositif de nettoyage selon l'une quelconque des revendications précédentes, dans lequel le plan de plancher (10) comprend un trou (6) pour faire passer une conduite ombilicale (70), dans lequel la conduite ombilicale (70) comprend au moins une ligne électrique et une ligne de signal de commande.

5. Dispositif de nettoyage selon la revendication 4, dans lequel le dispositif de nettoyage (1) comprend en outre des capteurs et des caméras (15, 16, 17) reliés à la ligne de signal de commande dans la conduite ombilicale (70).

6. Dispositif de nettoyage selon l'une quelconque des revendications précédentes 4 ou 5, dans lequel la conduite ombilicale (70) comprend en outre une conduite d'alimentation en fluide.

7. Dispositif de nettoyage selon la revendication 2, dans lequel le plan de plancher (10) comprend un trou (6) pour faire passer une conduite ombilicale (70), dans lequel la conduite ombilicale (70) comprend au moins une ligne électrique et une ligne de signal de commande, et une conduite d'alimentation en fluide et une pompe embarquée fournissant l'eau directement de l'environnement au collecteur (13) ou aux vannes (8) alimentant les buses (7).

8. Dispositif de nettoyage selon les revendications 1 à 7, comprenant en outre au moins un capteur gyroscopique (16) pour fournir une entrée de données de navigation/position à un dispositif de commande.

9. Dispositif de nettoyage selon les revendications 1 à 8, comprenant en outre au moins un capteur transducteur à ultrasons (16), pour fournir une entrée de données de vision environnante au dispositif de commande.

10. Dispositif de nettoyage selon l'une quelconque des revendications précédentes, dans lequel le dispositif de nettoyage a une forme sensiblement triangulaire, et l'ensemble de nettoyage à bec (5) agencé dans un boîtier de buse d'angle (2) fait saillie de l'un des coins du dispositif de nettoyage de forme triangulaire.

11. Dispositif de nettoyage selon l'une quelconque des revendications précédentes, dans lequel le dispositif de nettoyage comprend en outre un treillis/grille/filet de protection (110, 111, 112) pour empêcher des objets d'entrer dans l'espace interne du dispositif de nettoyage (1).

12. Dispositif de nettoyage selon la revendication 11, dans lequel le treillis/grille/filet de protection (110, 111, 112) est fixé au dispositif de nettoyage (1) par des moyens de liaison à dégagement rapide.

13. Dispositif de nettoyage selon l'une quelconque des revendications précédentes, dans lequel le dispositif de nettoyage comprend des moyens de flottabilité pour aider à maintenir le dispositif de nettoyage (1) en équilibre de flottabilité partiel ou total à une profondeur de fonctionnement requise.

14. Dispositif de nettoyage selon la revendication 13, dans lequel les moyens de flottabilité sont l'un parmi ou une combinaison d'éléments de flottabilité fixes et d'éléments de flottabilité à commande dynamique.

15. Système adapté pour faire fonctionner un dispositif de nettoyage, comprenant :
le dispositif de nettoyage (1) selon l'une quelconque des revendications 1 à 14,
un véhicule de base (71, 73) comprenant une unité de commande de salle de commande (82),
le dispositif de nettoyage (1) comprenant une unité de communication pour communiquer avec l'unité de commande de salle de commande (82) par l'intermédiaire d'un réseau de transmission filaire ou sans fil (80, 81) et est ainsi relié au véhicule de base (71, 73) par l'intermédiaire de moyens de transmission de signal de commande et de données de capteur (15, 16).

16. Système selon la revendication 15, dans lequel l'unité de commande de salle de commande (82) est un ordinateur comprenant un programme programmé pour analyser une sortie de capteur et de caméra (15, 16, 17), et pour transmettre des signaux de commande au dispositif de nettoyage (1).

17. Système selon la revendication 15, dans lequel l'unité de commande de salle de commande (82) est un ordinateur affichant une sortie de capteur et de caméra (15, 16, 17), et l'ordinateur reçoit et transmet en outre des signaux de commande d'un opérateur (83) au dispositif de nettoyage (1).

18. Procédé permettant de faire fonctionner le dispositif de nettoyage selon l'une quelconque des revendications 1 à 14, comprenant les étapes :
de lancement du dispositif de nettoyage (1) dans un compartiment à poissons,
de surveillance de l'environnement du dispositif de nettoyage (1) sur la base d'une entrée provenant de capteurs et de caméras (15, 16, 17), et de lancement d'un processus de nettoyage,
d'utilisation d'une ou plusieurs buses à jet (7) pour expulser un courant de fluide à grande vitesse dirigé orthogonalement hors de la surface extérieure du plan de plancher (11) sur des surfaces planes nécessitant un nettoyage,
d'utilisation d'un ensemble de nettoyage à bec (5) comprenant des buses à jet (19, 20, 21) pour expulser un courant de fluide à grande vitesse dirigé directement sur des zones difficiles d'accès et des objets nécessitant un nettoyage.
